# EUROPÄISCHE PATENTSCHRIFT

(11) **EP 0 891 486 B1**
(45) Veröffentlichungstag und Bekanntmachung des Hinweises auf die Patenterteilung: **27.11.2002**
(21) Anmeldenummer: 97903225.7
(22) Anmeldetag: 06.02.1997
(51) Int. Cl.: F02M 35/10

(54) **ANSAUGSYSTEM FÜR EINEN VERBRENNUNGSMOTOR**
ADMISSION SYSTEM FOR AN INTERNAL COMBUSTION ENGINE
SYSTEME D'ADMISSION POUR MOTEUR A COMBUSTION INTERNE

(30) Priorität: 04.04.1996 DE 19613467
(43) Veröffentlichungstag der Anmeldung: 20.01.1999
(73) Patentinhaber: FILTERWERK MANN & HUMMEL GmbH, 71631 Ludwigsburg (DE)
(72) Erfinder: ARNEGGER, Klaus, D-71636 Ludwigsburg (DE)
(74) Vertreter: Voth, Gerhard, Dipl.-Ing.
(86) Internationale Anmeldenummer: EP9700536
(87) Internationale Veröffentlichungsnummer: WO97038221

(56) Entgegenhaltungen:
- EP-A- 0 098 543
- EP-A- 0 432 919
- EP-A- 0 464 860
- WO-A-93/00505
- WO-A-93/23666
- DE-A- 3 536 522
- DE-A- 4 404 946
- DE-C- 3 742 057
- DE-U- 8 914 049
- FR-A- 2 017 218
- MTZ MOTORTECHNISCHE ZEITSCHRIFT, Bd. 54, Nr. 12, 1.Dezember 1993, STUTTGART, Seite 652 XP000413587 "Luftführungselemente aus Kunststoff"
- MTZ MOTORTECHNISCHE ZEITSCHRIFT, Bd. 53, Nr. 12, 1.Dezember 1992, STUTTGART, Seiten 570-580, XP000324292 BRÜGGEMANN: "Die neuen Vierventil-Ottomotoren für die mittlere Baureihe von Mercedes-Benz"
- MODERN PLASTICS INTERNATIONAL, Bd. 23, Nr. 6, 1.Juni 1993, LAUSANNE, Seiten 19-20, XP000369911 "3-D blow molding helps retain, gain markets"

## Beschreibung

Die Erfindung betrifft ein Ansaugsystem für einen Verbrennungsmotor insbesondere für ein Kraftfahrzeug nach dem Oberbegriff des Hauptanspruchs.

Aus der DE-OS 41 10 597 ist ein Einiaßsystem für eine Mehrzylinderbrennkraftmaschine bekannt, welches als Ansaugsystem gestaltet ist. Bei einem solchen Einlaßsystem sind normalerweise eine Vielzahl von Ansaugrohren erforderlich, die die gereinigte Ansaugluft ausgehend von einem Sammelkanal den einzelnen Ansaugöffnungen im Zylinderkopf des Motors zuführen. Das Ansaugsystem besteht üblicherweise aus Aluminium oder Kunststoff und wird im Gieß- oder Spritzgießverfahren hergestellt.

Ein Nachteil solcher Systeme besteht in dem aufwendigen Herstellungsprozeß. Es ist beispielsweise bekannt ein Ansaugsystem im Kernschmelzverfahren herzustellen. Dabei wird ein Metallkern, der die späteren Hohlräume des Systems bildet, mit Kunststoff umspritzt und dieser Metallkern anschließend ausgeschmolzen. Es besteht auch die Möglichkeit ein solches Ansaugsystem insbesondere in Kunststoff in Mehrschalentechnik herzustellen, das heißt, einzelne Kunststoffschalen zu bilden und diese miteinander zu verschweißen.

Aus der WO-A-93/23666 ist ein Ansaugsystem zu entnehmen, welches Ansaugrohre aufweist, wobei diese Ansaugrohre in Blasformtechnik hergestellt sind. Die Verbindung zwischen Ansaugrohr und Flansch ist eine Steckverbindung, wobei zur Anpassung der Bauteile eine elastische Dichtung in diesem Verbindungsbereich eingefügt wird. Das Einfügen einer zusätzlichen Dichtung verringert die Prozeßsicherheit und kann unter Umständen dazu führen, dass Fremdluft angesaugt wird.

Der Erfindung liegt die Aufgabe zugrunde, die genannten Nachteile zu vermeiden und ein Ansaugsystem zu schaffen, das einfach herstellbar ist und ohne hohen Montageaufwand. Diese Aufgabe wird durch die Merkmale des Hauptanspruchs gelöst.

Der Kerngedanke der Erfindung liegt darin, die sehr unregelmäßig geformten Ansaugrohre, welche den Herstellungsprozeß erheblich erschweren, aus einem oder mehreren Blasteilen herzustellen und diese Blasteile mit Flanschefementen bzw. weiteren Kunststsoffbauteilen, welche eine einfache Struktur aufweisen zu verbinden. Bei der Verbindung des Blasteils mit einem Anschlußflansch und weiteren Elementen bietet es sich an, die Verbindungsstelle schwingungsentkoppelt auszugestalten. Dies bedeutet, daß zwischen den beiden zu verbindenden Elementen in einem Montagespritzgießverfahren eine elastomere Masse eingebracht wird. Diese elastomere Masse stellt einerseits eine zuverlässige Verbindung zwischen den beiden Elementen dar. Andererseits entkoppelt sie diese Elemente hinsichtlich der Übertragung von Schwingungen.

Ein weiterer Vorteil bei der Verwendung von Blasteilen besteht darin, daß die Schwingrohrlängen variabel gestaltet werden können, das heißt, eine Optimierung ist ohne großen Aufwand möglich.

Eine bevorzugte Weiterbildung der Erfindung sieht vor, die nicht in Kunststoffblastechnik hergestellten Elemente im Spritzgießverfahren aus thermoplastischem Kunststoff herzustellen.

Es ist weiterhin gemäß einer Ausgestaltung der Erfindung vorgesehen, an de Sammeleinheit einen weiteren Anschluß zu einem oder mehreren Ansaugrohren vorzusehen und diesen Anschluß mit einer Schalteinrichtung koppel bzw. entkoppelbar zu gestalten. Durch den weiteren Anschluß bietet sich die Möglichkeit, das Ansaugsystem mit einem zusätzlichen Leitungskanal zu versehen, der entsprechend der Drehzahl des Motors und dem Lastzustand zu- bzw. abgeschaltet werden kann.

Zur Schaffung eines hochgenauen Kuststoffbauteils besteht die Möglichkeit, dieses aus glasfaserverstärktem Thermoplast herzustellen, wobei die Glasfasern sogenannte Langfasern sind. Diese Langfasern haben den Vorteil, daß sie sich im Kunststoff anisotrop anlagern und sich damit das Verzugsverhalten des Kunststoffs isotrop verhält. Bevorzugt kann als Kunststoff Polypropylen oder Polyamid verwendet werden. Aufgrund der einfachen Herstellung der Sammeleinheit können darin zusätzliche Elemente wie beispielsweise Drosselklappe, Luftmengenmesser und sonstige erforderlichen Bauteile integriert werden.

Ausführungsbeispiele der Erfindung sind in den Zeichnungen dargestellt und werden im folgenden näher erläutert.

Die Zeichnungen zeigen:
- Figur 1: ein Ansaugsystem in einer schematischen Darstellung im Querschnitt,
- Figur 2: in einer Detaildarstellung eine Verbindung zwischen dem Kunststoffblasteil und einem Anschlußflansch,
- Figur 3: eine Draufsicht auf ein Ansaugsystem.

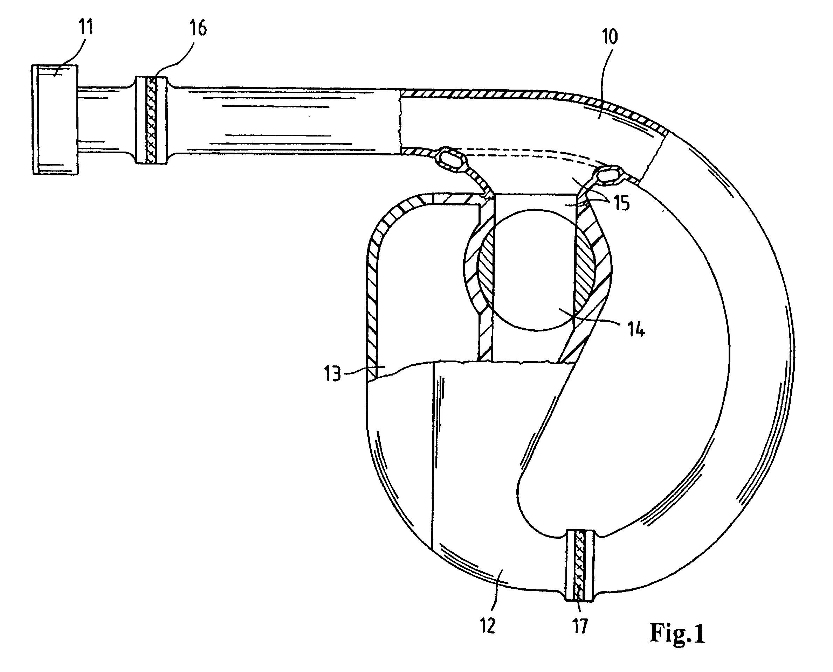

Die Figur 1 zeigt ein Ansaugsystem bestehend aus einem Ansaugrohr 10, einem Flansch 11, eine Sammeleinheit 12 mit einem Deckel 13. In der Sammeleinheit 12 befindet sich eine Schaltwalze 14, die in der hier gezeigten Stellung eine Öffnung 15 mit der Sammeleinheit 12 verbindet. Das Ansaugrohr ist an der Verbindungsstelle 16 mit dem Flansch 11 und der Verbindungsstelle 17 mit der Sammeleinheit 12 verbunden. Während über den Flansch 11 das gesamte Ansaugsystem am Zylinderkopf eines hier nicht dargestellten Verbrennungsmotors befestigt wird, stützt sich dieses System auf der gegenüberliegenden Seite an die hier nicht dargestellte Stütze oder Befestigungselementen ab.

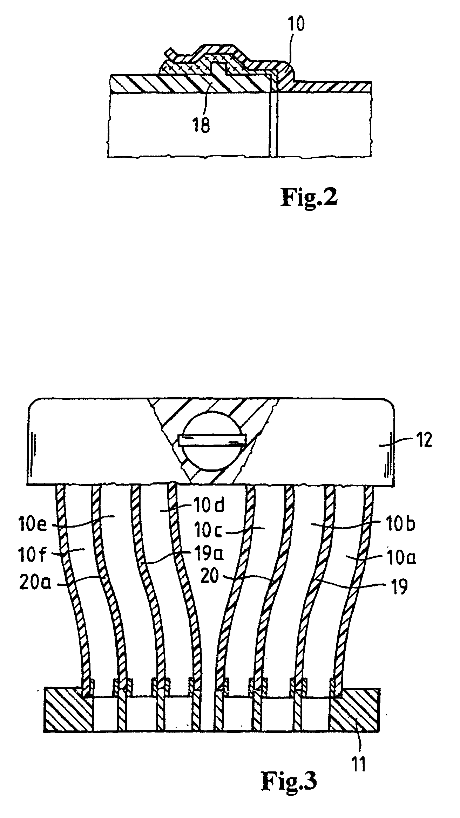

Die Verbindungsstelle 16 bzw. Verbindungsstelle 17 ist in einer Detaildarstellung in Figur 2 gezeigt. Das in Kunststoff plastisch hergestellte Ansaugrohr 10 greift über ein Flanschelement 18 wobei zwischen den beiden Elementen ein geringfügiger Abstand vorhanden ist. Dieser Zwischenraum wird in einem sogenannten Montagespritzgießverfahren nach dem Zusammenstecken der beiden Teile mit einem Elastomer, beispielsweise TPE ausgefüllt. Dieses Elastomer stellt eine kraft- und formschlüssige Verbindung zwischen den beiden Teilen her. Außerdem ist das Elastomer geeignet, Schwingungen, die beispielsweise über das Flanschelement 18 in das Ansaugsystem eingeleitet werden, wirksam zu bedämpfen. Auch die Öffnung 15, zwischen der Sammeleinheit 12 und dem Ansaugrohr 10, kann aus einem elastomeren Werkstoff gebildet werden. Damit ist ebenfalls eine Schwingungsübertragung eines Bauteils auf das andere verhindert.

Figur 3 zeigt in einer Draufsichtdarstellung ein Ansaugsystem. Die einzelnen Ansaugrohre 10 a bis 10 f sind in Dreiergruppen zusammengefasst. Eine Dreiergruppe wird aus einem einzigen Schlauch geblasen. Dieser Schlauch wird zwischen den sich zu bildenden Saugrohren gequetscht, so daß sich zwei Quetschnähte 19, 20 bzw. 19 a, 20 a einstellen. Die beiden Rohrgruppen können in einem Arbeitsgang sowohl mit dem Flansch 11 als auch mit der Sammeleinheit 12 verbunden werden. In der Sammeleinheit ist eine hier schematisch dargestellte Drosselklappe zur Luftmengenregulierung integriert. Selbstverständlich können weitere Elemente wie beispielsweise Ventile, Ölabscheider oder ähnliches in oder an der Sammeleinheit angeschlossen werden.

## Patentansprüche

1. Ansaugsystem für einen Verbrennungsmotor, insbesondere für einen Kraftfahrzeugmotor, **gekennzeichnet durch** folgende Merkmale:
einen Flansch (11) zum Befestigen des Systems an der Brennkraftmaschine,
eine Sammeleinheit (12), welche wenigstens einen Anschluß für die Zuführung der Ansaugluft und entsprechend der Anzahl der Ansaugrohre Anschlüsse für die Ansaugrohre aufweist, wobei die Verbindung zwischen dem Anschluß des Flansches und dem jeweiligen Anschluß der Sammeleinheit mit Ansaugrohr, welche in Kunststoffblastechnik hergestellt sind, erfolgt, wobei der Anschluß des Ansaugrohres an dem Anschlußflansch und / oder der Anschluß des Ansaugrohres an der Sammeleinheit schwingungsentkoppelt ist, und wobei das jeweilige Ansaugrohr an den Anschlüssen über ein Elastomer, welches im Montagespritzgießverfahren eingebracht ist, verbunden ist.

2. Ansaugsystem nach Anspruch 1, **dadurch gekennzeichnet, daß** der Anschlußflansch und die Sammeleinheit im Spritzgießverfahren aus thermoplastischem Kunststoff hergestellt sind.

3. Ansaugsystem nach Anspruch 1 und 2, **dadurch gekennzeichnet, daß** von der Sammeleinheit ein weiterer Anschluß an das Ansaugrohr vorgesehen ist, wobei die Sammeleinheit mit einer Schalteinrichtung versehen ist, die diesen weiteren Anschluß öffnet oder verschließt.

4. Ansaugsystem nach Anspruch 3, **dadurch gekennzeichnet, daß** der weitere Anschluß auf ein zusätzliches Saugrohr geführt ist.

5. Ansaugsystem nach einem der vorherigen Ansprüche, **dadurch gekennzeichnet, daß** die Sammeleinheit aus glasfaserverstärktem Thermoplast besteht, welches Langfaser enthält.

6. Ansaugsystem nach einem der vorherigen Ansprüche, **dadurch gekennzeichnet, daß** die Sammeleinheit zusätzliche Elemente wie Drosselklappe, Luftmengenmesser aufweist und einen modularen Aufbau besitzt.

## Claims

1. Intake system for an internal combustion engine, more especially for an automotive vehicle engine, **characterised by** the following features:
a flange (11) for fastening the system to the internal combustion engine,
a collecting unit (12), which has at least one connector for supplying the intake air and a number of connectors for the intake pipes corresponding to the number of intake pipes, the connection being effected between the connector of the flange and the respective connector of the collecting unit with an intake pipe, which pipes are produced by the plastics material blow-moulding technique, the connector of the intake pipe to the connecting flange and/or the connector of the intake pipe to the collecting unit being decoupled in an oscillatory manner, and the respective intake pipe for connection to the connectors being connected via an elastomer, which is introduced by an assembly injection moulding method.

2. Intake system according to claim 1, **characterised in that** the connecting flange and the collecting unit are produced from thermoplastic plastics material by an injection moulding method.

3. Intake system according to claims 1 and 2, **characterised in that** an additional connector for connection to the intake pipe is provided from the collecting unit, the collecting unit being provided with a switching means which opens or closes said additional connector.

4. Intake system according to claim 3, **characterised in that** the additional connector extends to an additional suction pipe.

5. Intake system according to one of the previous claims, **characterised in that** the collecting unit is formed from glassfibre-reinforced thermoplastic material which contains long fibres.

6. Intake system according to one of the previous claims, **characterised in that** the collecting unit includes additional components, such as a throttle flap and an air quantity measurer, and it has a modular construction.

## Revendications

1. Système d'aspiration pour un moteur à combustion interne, notamment un moteur de véhicule,
**caractérisé par**
- une bride (11) pour fixer le système au moteur à combustion interne,
- une unité collectrice (12) comportant au moins un branchement pour l'alimentation de l'air aspiré et des branchements pour tubulures en nombre correspondant aux tubulures d'aspiration,
- la liaison entre le branchement de la bride et chaque branchement de l'unité collectrice se fait avec la tubulure d'aspiration fabriquée en technique de soufflage de matière plastique, le branchement de la tubulure d'aspiration sur la bride de branchement et/ou le branchement de la tubulure d'aspiration sur l'unité collectrice étant découplé vis-à-vis des vibrations, et
- chaque tubulure d'aspiration respective étant reliée au branchement par un élastomère intégré pendant l'opération de montage au moment de l'injection.

2. Système d'admission selon la revendication 1,
**caractérisé en ce que**
la bride d'admission et l'unité collectrice sont réalisées par injection en matière thermoplastique.

3. Système d'admission selon les revendications 1 et 2,
**caractérisé en ce qu'**
un autre branchement est prévu sur l'unité collectrice pour la tubulure d'admission, l'unité collectrice étant munie d'une installation collectrice qui ouvre ou ferme cet autre branchement.

4. Système d'admission selon la revendication 3,
**caractérisé en ce que**
l'autre branchement est guidé vers une tubulure d'admission supplémentaire.

5. Système d'admission selon l'une quelconque des revendications précédentes,
**caractérisé en ce que**
l'unité collectrice est formée d'une matière thermoplastique renforcée par des fibres de verre et qui contient des fibres longues.

6. Système d'admission selon l'une quelconque des revendications précédentes,
**caractérisé en ce que**
l'unité collectrice possède des éléments supplémentaires tels qu'un volet d'étranglement, un débitmètre d'air et présente une construction modulaire.
